(19)

**Europäisches Patentamt**

**European Patent Office**

**Office européen des brevets**

(11) **EP 3 657 440 B1**

(12) **EUROPÄISCHE PATENTSCHRIFT**

(45) Veröffentlichungstag und Bekanntmachung des Hinweises auf die Patenterteilung:
**11.08.2021 Patentblatt 2021/32**

(21) Anmeldenummer: **19181124.9**

(22) Anmeldetag: **19.06.2019**

(51) Int Cl.:
**G06T 7/55** (2017.01)

(54) **VERFAHREN UND SYSTEM ZUR DREIDIMENSIONALEN REKONSTRUKTION EINES MENSCHLICHEN KOPFES AUS MEHREREN BILDERN**

METHOD AND SYSTEM FOR THE THREE-DIMENSIONAL RECONSTRUCTION OF A HUMAN HEAD FROM A PLURALITY OF IMAGES

PROCÉDÉ ET SYSTÈME DE RECONSTRUCTION TRIDIMENSIONNELLE D'UNE TÊTE HUMAINE À PARTIR D'UNE PLURALITÉ D'IMAGES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.11.2018 DE 102018129600**

(43) Veröffentlichungstag der Anmeldung:
**27.05.2020 Patentblatt 2020/22**

(73) Patentinhaber: **Fielmann Ventures GmbH**
**22083 Hamburg (DE)**

(72) Erfinder:
• **SCHWINGER, Tobias**
**22605 Hamburg (DE)**
• **RÜTZEL, Thomas**
**22455 Hamburg (DE)**

(74) Vertreter: **Seemann & Partner Patentanwälte mbB**
**Raboisen 6**
**20095 Hamburg (DE)**

(56) Entgegenhaltungen:
**WO-A2-2017/029488**

• **Yu Yang ET AL: "Landmark Weighting for 3DMM Shape Fitting", arXiv e-prints, 16. August 2018 (2018-08-16), XP055643100, Gefunden im Internet: URL:https://arxiv.org/ftp/arxiv/papers/180 8/1808.05399.pdf [gefunden am 2019-11-15]**
• **VOLKER BLANZ ET AL: "A morphable model for the synthesis of 3D faces", COMPUTER GRAPHICS PROCEEDINGS. SIGGRAPH 99; [COMPUTER GRAPHICS PROCEEDINGS. SIGGRAPH], ACM ? - NEW YORK, NY, USA, 1515 BROADWAY, 17TH FLOOR NEW YORK, NY 10036 USA, 1. Juli 1999 (1999-07-01), Seiten 187-194, XP058128792, DOI: 10.1145/311535.311556 ISBN: 978-0-201-48560-8**
• **BLANZ V ET AL: "A statistical method for robust 3D surface reconstruction from sparse data", 3D DATA PROCESSING, VISUALIZATION AND TRANSMISSION, 2004. 3DPVT 2004. PROCEEDINGS. 2ND INTERNATIONAL SYMPOSIUM ON THESSALONIKI, GREECE 6-9 SEPT. 2004, PISCATAWAY, NJ, USA,IEEE, 6. September 2004 (2004-09-06), Seiten 293-300, XP010725119, DOI: 10.1109/TDPVT.2004.1335212 ISBN: 978-0-7695-2223-4**
• **M. ZOLLHÖFER ET AL: "State of the Art on Monocular 3D Face Reconstruction, Tracking, and Applications", COMPUTER GRAPHICS FORUM, Bd. 37, Nr. 2, 1. Mai 2018 (2018-05-01), Seiten 523-550, XP055643367, GB ISSN: 0167-7055, DOI: 10.1111/cgf.13382**

EP 3 657 440 B1

## Beschreibung

Die Erfindung betrifft ein Verfahren und ein System zur dreidimensionalen, insbesondere maßstabsgetreuen, Rekonstruktion eines menschlichen Kopfes aus mehreren Bildern. Genauer betrifft die Erfindung ein Verfahren zur rechnerischen 3D-Rekonstruktion eines vollständigen oder unvollständigen (zum Beispiel beschränkt auf Partien des Gesichts) menschlichen Kopfes aus mehreren Einzelbildern für optometrische Anwendungen.

Die vorliegende Patentanmeldung nimmt die Priorität der deutschen Patentanmeldung mit dem Titel "Verfahren und System zur virtuellen Anprobe einer Brille" mit dem amtlichen Anmeldeaktenzeichen 10 2018 129 600.2 in Anspruch, deren Offenbarungsgehalt durch Bezugnahme vollinhaltlich in die vorliegende Patentanmeldung aufgenommen sein soll. Das vorliegend weiterentwickelte erfindungsgemäße Verfahren zur Erstellung von virtuellen Modellen von Köpfen ist unter anderem zum Zwecke der darin beschriebenen virtuellen Anprobe von Brillen einsetzbar, aber nicht auf eine solche Anwendung eingeschränkt.

Der Verkauf persönlich angepasster Brillen ist eine Aufgabe von Optikern und Optik-Fachgeschäften und erfolgt unter Anpassung einer Brille an die Form des Kopfes eines Kunden. Dieser Vorgang soll unter Einsatz von Computertechnik dahingehend modernisiert werden, dass er für den Kunden komfortabel wird und das Handwerk des Optikers effektiver gestaltet. Hierzu muss ein realitätsgetreues rechnerisches 3D-Modell vom Kopf des Kunden erstellt werden. Ein solches Modell ermöglicht die rechnerisch virtualisierte Anpassung der Brille an die Kopfform des Kunden, Einpassung der Brillengläser, und die Darstellung beliebiger Brillen am Kopf des Kunden zur Produktauswahl. Zum Beispiel können dadurch im Rahmen von Verkaufsgesprächen Brillen "virtuell anprobiert" werden, die nicht physisch vorliegen, aber auf Bestellung verfügbar sind. So wird auch der direkte Vertrieb persönlich angepasster Brillen über das Internet möglich.

Zur Erstellung von 3D-Modellen von Gegenständen oder auch, sofern dazu geeignet, menschlichen Köpfen, ist es bekannt, ad-hoc Scanvorrichtungen, beispielsweise Laserscanner zu verwenden. Diese Geräte sind bei hinreichender Genauigkeit sehr teuer und in bestimmten Realisierungen auch möglicherweise gesundheitsschädlich. Die Ausgabe hat keine kohärente Form und ist daher nicht direkt verwendbar. Es muss im Allgemeinen eine Registrierung und Bereinigung der Rohdaten erfolgen.

Weiterhin ist die generische Photogrammetrie bekannt, beispielsweise aus Hartley, Zisserman, "Multiple View Geometry in Computer Vision", Zweite Auflage 2004, Cambridge University Press, oder unter den Stichworten *"Multiple View Geometry"* und *"Structure from Motion"*. Der generische Ansatz ist für menschliche Köpfe allerdings ungeeignet, da selbst bei einer großen Zahl von Eingabebildern keine hinreichende Genauigkeit erzielt werden kann. Die Ausgabe hat keine kohärente Form und ist daher nicht direkt verwendbar. Auch kann der Fehler der Messung bei diesem Ansatz nicht abgeschätzt werden.

Andere Ansätze basieren eine direkte Gesichtskonstruktion auf den Einsatz neuronaler Netze, wie beispielsweise in Tran, Liu, "Nonlinear 3D Face Morphable Model", Proceedings of IEEE Computer Vision and Pattern Recognition, 2018 beschrieben. Die bekannten Verfahren verwenden allerdings nur ein einzelnes Eingabebild. Je nach Realisierung bestehen Beschränkungen bezüglich des Koordinatensystems, d.h. die Koordinaten sind entweder nur zweidimensional oder vernachlässigen die perspektivische Projektion.

Ein weiterer Ansatz beruht auf der Regression von *"Morphable Models"*, beispielsweise in Gerig, Morel-Foster, Blumer Egger, Lüthi, Schönborn, Vetter, "Morphable Face Models - An Open Framework", Computer Research Repository (CoRR) 2017. Die Regression gilt auch für ein einzelnes Eingabebild oder für räumliche Einschränkungen. Eine triviale Generalisierung auf mehrere Eingabebilder nutzt den Informationsgehalt in den Bildern nicht optimal aus.

WO 2017/029488 A2 betrifft ein Verfahren zur Erzeugung einer Bilddatei eines personalisierten dreidimensionalen Kopfmodells eines Users. Dazu wird zumindest ein zweidimensionales Bild des Gesichts aufgenommen und daran eine automatisierte Landmark-Erkennung vorgenommen. Es wird eine dreidimensionale Rekonstruktion der Gesichtsgeometrie auf der Grundlage eines Formmodells erzeugt, eine Oberflächenstrukturkarte in Bezug auf die dreidimensionale Gesichtsgeometrierekonstruktion generiert und es wird interpoliert, um ein personalisiertes dreidimensionales Kopfmodell des Users zu generieren. Anschließend wird eine Bilddatei des personalisierten dreidimensionalen Kopfmodells des Users erzeugt. Damit soll Verbrauchern beim Onlineshopping die Möglichkeit gegeben werden, einen dreidimensionalen Avatar mit ihrer eigenen Form und dem eigenen Gesicht zu erzeugen, und den Avatar mit einer fotorealistischen Visualisierung von Kleidern anzuziehen, um zu beurteilen, wie bestimmte Kleider an dem User aussehen werden.

In Yu Yang et al., "Landmark Weighting for 3DMM Shape Fitting", arXiv e-prints, 16. August 2018, XP055643100, https://arxiv.org/ftp/arxiv/papers/1808/1808.05399.pdf ist ein Verfahren offenbart, in dem bei einem 3DMM 3D-Gesichter von einem einzelnen 2D-Gesichtsbild rekonstruiert werden. Dabei schätzt das 3DMM die Korrespondenz zwischen den 2D- und 3D-Landmarks ab. In D2 wird dieses Verfahren weiterentwickelt, indem für jedes Paar von 2D- und 3D-Landmarks die geschätzten Fehler mittels einer Gewichtung mit einbezogen werden. Davon ausgehend liegt der Erfindung die Aufgabe zugrunde, ein Verfahren und System zur Verfügung zu stellen, mit denen ein statistisch unverzerrtes rechnerisches 3D-Modell eines menschlichen Kopfes in einer für den Kunden komfortablen Art und Weise für optometrische Anwendungen erstellt werden kann.

Diese der Erfindung zugrundeliegende Aufgabe wird durch ein Verfahren zur dreidimensionalen, insbesondere maßstabsgetreuen, Rekonstruktion wenigstens eines Teils eines menschlichen Kopfes aus mehreren Bildern, die wenigstens den zu rekonstruierenden Teil des menschlichen Kopfes aus verschiedenen Perspektiven zeigen, gelöst, welches die folgenden Verfahrensschritte umfasst:

a) Anwenden einer Merkmalserkennung auf die mehreren Bilder, bei der Gesichtsmerkmale und deren Koordinaten erfasst werdden,

b) Bestimmen von Abbildungsparametern zu den mehreren Bildern, die die jeweiligen kameraabhängigen perspektivischen Projektionen der mehreren Bilder beschreiben,

c) Formulierung von geometrischen Einschränkungen für die Anpassung eines dreidimensionalen Zielmodells anhand der Positionen der erfassten Gesichtsmerkmale aus den mehreren Bildern,

d) Anpassen des dreidimensionalen Zielmodells an die geometrischen Einschränkungen,

welches dadurch weitergebildet ist, dass bei der Anpassung des Zielmodells Daten einer wenigstens teilweise erfassten Fehlerstruktur der Entsprechungen der Merkmalspositionen im Zielmodell, welche das perspektivabhängige Verhalten der Merkmalserkennung abbildet, zur Dekorrelation der geometrischen Einschränkungen durch Gewichtung der geometrischen Einschränkungen entlang bestimmter Richtungen und/oder gemäß ihres statistischen Zusammenhangs verwendet werden, wobei die Fehlerstruktur der Entsprechungen der Merkmalspositionen im Zielmodell a priori erstellt wird, indem das perspektivabhängige Verhalten der Merkmalserkennung jeweils unter bestimmter Ansicht der Kamera auf das Objekt anhand einer Vielzahl von Trainingsbildern, zu denen die Maße der abgebildeten menschlichen Köpfe und ein exaktes, rechnerisches Modell der Abbildung bekannt sind, analysiert wird.

Im Rahmen der Erfindung sind Merkmale, die mit "insbesondere" oder "vorzugsweise" gekennzeichnet sind, als fakultative Merkmale zu verstehen.

Durch die erfindungsgemäße Vorgehensweise findet eine Gewichtung inversproportional zu den aus den geometrischen Einschränkungen erwarteten Fehlern statt, zusätzlich entlang frei orientierter Richtungen und unter Berücksichtigung von Wechselwirkungen zwischen den einzelnen Merkmalspunkten, wodurch sich besonders effektiv der verlässliche Anteil der in den Eingabebildern enthaltenen geometrischen Informationen extrahieren und damit für die Anpassung des Zielmodells verwerten lässt.

Das Verfahren kann unter Verwendung mehrerer Bilder aus verschiedenen Perspektiven zu einer maßstabsgetreuen Anpassung des Zielmodells verwendet werden. Jedoch kann im Rahmen der Erfindung auch schon auf der Grundlage eines einzelnen Bildes eine Anpassung des Zielmodells erfolgen. Das resultierende Modell kann in dem Fall bei entsprechender Realisierung der Anpassung durch wiederholte Anwendung der Verfahrensstruktur mittels weiterer, gegebenenfalls später aufgenommener Bilder schrittweise verfeinert werden.

Im Verfahren können auch unvollständige Tiefeninformationen zu den aufgenommenen Bildern berücksichtigt werden. Dadurch lässt sich die Messung präzisieren und auch der Maßstab bestimmen. Bei den Tiefeninformationen handelt es sich beispielsweise um das Bild einer Tiefenkamera, wobei ein Bezug zu einem Lichtbild durch entsprechende Kalibrierung hergestellt ist, wie dies beispielsweise bei modernen Smartphones oder Spezialhardware der Fall ist.

Soweit die Ausführungen hierunter auf den Fall mehrerer Bilder aus verschiedenen Perspektiven Bezug nehmen, ist zu beachten, dass die Erläuterungen auch für den Fall nur eines einzelnen Bildes aus einer Perspektive gelten, insbesondere, wenn dieses durch Tiefeninformationen aus einer Tiefenkamera angereichert ist.

Die einzelnen Verfahrensschritte a) bis d) sind prinzipiell bekannt und werden im Folgenden zunächst beispielhaft erläutert. Bevor die Grundidee der Erfindung, bei der Anpassung des Zielmodells eine Fehlerstruktur der Einschränkungen zu verwenden, welche den perspektivabhängigen Informationsgehalt in den Merkmalskoordinaten der Eingabebilder bezüglich der räumlichen Form des Modells abbildet, näher ausgeführt wird, wird ein konzeptioneller Rahmen dafür geschaffen, so dass diese in einer Vielzahl von Ausführungsformen eingebettet werden kann. In diesen Ausführungsformen sind Merkmalserkennung wie Zielmodell bezüglich Dichte und Dimensionalität der Koordinaten bzw. bezüglich der enthaltenen statistischem Informationen variabel. Das Verfahren eignet sich darüber hinaus zur Rekonstruktion von maßstabsgetreuen Modellen, wobei insbesondere approximative Maßnahmen oder die Verwendung einer Kamerainstallation oder einer Tiefenkamera für diesen Zweck erörtert werden.

## Merkmalserkennung

Die im Verfahrensschritt a) angewandte Merkmalserkennung dient dazu, gesichtstypische Merkmale in ihrem räumlichen Bezug zueinander im Bild zu erkennen, die bei der Anpassung des Zielmodells verwendet werden. Beim menschlichen Gesicht existieren nur wenige markante, und damit einfach zu identifizierende Positionen. Daher ist ein zuverlässiges Auffinden von Merkmalspositionen nur unter einer ganzheitlichen Betrachtung, die gesichtstypische Merkmale in ihrem örtlichen Bezug zueinander im Bild berücksichtigt, möglich. Heutige Computer sind leistungsfähig genug, eine solche Betrachtungsweise aus markierten Daten maschinell aus Trainingsbildern zu lernen. Dadurch ist es möglich, 2D-Koordinaten definierter Merkmalspositionen im Gesicht zu finden. Solche Verfahren sind an sich bekannt, beispielsweise aus Sun, Wang, Tang, "Deep Convolutional Network Cascade for Facial Point Detection", Proceedings of IEEE Conference on Computer Vision and Pattern Recognition (CVPR), 2013.

Mit solchen Verfahren wird auch ein implizites, verborgenes Modell gelernt, so dass Informationen, die nicht direkt erkennbar sind, wie zum Beispiel die Koordinaten verdeckter Merkmalspositionen, aus erkennbaren Informationen geschlussfolgert werden können. Wenn die dreidimensionalen Maße der Köpfe, die den Trainingsbildern zugrunde liegen, bekannt sind, zum Beispiel weil diese mit Computergrafik erzeugt oder abgeglichen wurden, lassen sich, ausgehend von einem Einzelbild, 3D-Koordinaten in Bezug auf die Orientierung der Kamera für die Merkmalspositionen finden.

Ein ähnlicher Ansatz ermöglicht die Bestimmung von dichten 3D-Punktwolken in einer 2D-Topologie entlang der Oberfläche des Kopfes statt weniger, definierter Kennpunkte. Die Positionen in der 2D-Topologie sind dabei semantisch deckungsgleich, d.h., sie repräsentieren unter Verformung stets dieselbe Stelle des menschlichen Kopfes und bilden damit die Merkmalspositionen (vgl. Feng, Wu, Shao, Wang, Zhou, "Joint 3D Face Reconstruction and Dense Alignment with Position Map Regression Network", Computer Research Repository (CoRR), 2013, https://arxiv.org/pdf/1803.07835.pdf).

Allerdings kann aus einem Einzelbild kein Maßstab gewonnen werden. Auch kann die zugrundeliegende perspektivische Projektion eines Bildes nicht ohne zusätzliche Informationen bestimmt werden. Selbst, wenn diese bekannt ist, besteht immer noch eine Mehrdeutigkeit zwischen Distanz und Objektgröße, so dass die oben genannten 3D-Koordinaten im allgemeinen Fall definierten Einschränkungen unterliegen. Die referenzierten Quellen verwenden in diesem Zusammenhang eine orthografische Projektion unter Skalierung und Translation (manchmal auch als "schwach perspektivische Projektion" bezeichnet) bei definiertem Abstand und Maßstab des 3D-Modells. Unter Vernachlässigung der Tiefenachse sind die entsprechenden Verfahren damit auch zur Gewinnung von 2D-Koordinaten im Koordinatensystem des jeweiligen Bildes geeignet. Um die 3D-Koordinaten im Rahmen von perspektivischer Projektion zu interpretieren, müssen diese unter Kenntnis der fehlenden Informationen, Abbildungswinkel, Maßstab und Objektabstand, entsprechend korrigiert werden, wobei jeweils eine dieser Größen von den anderen abhängt.

Alle diese Anwendungen von Merkmalserkennung, unter Einschluss von Varianten, die unter abweichenden Implementierungen oder spezielleren Trainingsbedingungen möglich sind, können im Rahmen der vorliegenden Erfindung eingesetzt werden.

**Dreidimensionale Zielmodelle**

Das dreidimensionale Zielmodell wird durch Anpassung einer Vorlage gewonnen, die speziell auf die Repräsentation des menschlichen Kopfes, speziell des Gesichts abzielt.

Die Ausgabe gemäß der gewählten Vorlage ist stets strukturgleich, was in der Anwendung den bedeutenden Vorteil stabiler Adressen, wie zum Beispiel Vertexindices, Oberflächenkoordinaten oder Punkten an einem Referenzmodell für semantisch gleiche Teile des Kopfes bietet. Zum Beispiel wird dadurch die Nasenspitze in einem Polygonnetz-Modell durch Vertices repräsentiert, die immer an derselben Stelle in der Datenstruktur zu finden sind. Folglich können die Koordinaten zu solchen Positionen einfach direkt ausgelesen werden, ohne dass eine vergleichsweise aufwändige räumliche Suche stattfinden muss.

In einer beispielhaften Ausführungsform besteht das Vorlagemodell lediglich aus einer Polygonnetz-Topologie, wobei ein semantischer Bezug zwischen den Vertices und bestimmten Teilen des Kopfes besteht. Die Topologie ist so geartet, dass sich die Wölbungen eines menschlichen Kopfes beim Einsetzen von 3D-Koordinaten an jeder Vertexposition gemäß dieser Entsprechung abbilden lassen. Die räumlichen Positionen der Vertices sind nicht Teil der Vorlage und werden im Rahmen der Anpassung erzeugt. Das Wissen über die räumliche Beschaffenheit befindet sich in diesem Fall an einer anderen Stelle des Systems, nämlich in der Merkmalserkennung und/oder dem Anpassungsalgorithmus.

Insbesondere sind plausible Mittelwerte zu bestimmten oder allen Positionen bekannt, um die Bestimmung der Kameraorientierungen zu vereinfachen. Insbesondere existieren zusammenhängende 2D-Oberflächenkoordinaten zu allen Vertices, und die Anpassung des Modells geschieht dann durch ein zweidimensionales Array von 3D-Koordinaten, welches durch die Oberflächenkoordinaten unter bilinearer Interpolation adressiert wird und die räumlichen Positionen der Vertices bestimmt. Dieser Ansatz begünstigt den Einsatz in Verbindung mit neuronalen Netzen, die speziell für ein solches Modell und Ausmaße eines Koordinatenarrays trainiert werden. Ein Beispiel für den Einsatz neuronaler Netze im Zusammenhang mit einem 3DMM findet sich in Bas, Huber, Smith, Awais, Kittler, "3D Morphable Models as Spatial Transformer Networks", Computer Research Repository (CoRR) 2017 (https://arxiv.org/pdf/1708.07199.pdf).

In einer alternativen Ausführungsform besteht das Vorlagemodell aus einer Polygonnetz-Topologie, wobei zu jedem Vertex eine räumliche Position und Verschiebungsvektoren vorhanden sind. Die Formen werden durch Koeffizienten beschrieben, welche die Faktoren der jeweiligen Verschiebungsvektoren bei Aufsummierung mit der Ausgangsposition zur Berechnung der 3D-Koordinaten aller Vertices sind.

Werden die drei Koordinatenkomponenten aller Vertices zu Spaltenvektoren über $p$ Elementen zusammengefasst, lässt sich das Modell durch einen Ausgangsvektor $\mu$ und eine Matrix der Verschiebungen $Q$ beschreiben. Der Vektor $\alpha$ beschreibt eine Form $v_s(\alpha)$ durch $n$ Koeffizienten:

$$v_s(\alpha) = \mu + Q\alpha \ \in \mathbb{R}^p, \alpha \in \mathbb{R}^n$$

Bei Ausgangspositionen und Verschiebungen handelt es sich um das empirische Mittel $\mu$ bzw. die dazu relativen ersten Hauptkomponenten (Spalten der Matrix $Q$) über einer festen Menge an repräsentativen 3D-Modellen, vorzugsweise 3D-Scans, deren einzelne Vertices einander semantisch entsprechen und bezüglich aller Koordinatenkomponenten als vieldimensionale statistische Verteilung aufgefasst werden. Die Matrix $Q$ ist dabei das Produkt einer Orthogonalbasis $U$ und einer Diagonalmatrix $D$, welche jeweils die Hauptachsen bzw. ihre Längen beschreiben. Die Spalten von $Q$ sind dadurch (unter Annahme einer Normalverteilung) auf Standardabweichungen normiert. Eine zufällige Auswahl normalverteilter Koeffizienten beschreibt somit ebenso normalverteilte Gesichter aus dem Rückschluss auf die zugrundeliegende Population.

$$\alpha \sim \mathcal{N}(0, I_n) \to v_s(\alpha) \sim \mathcal{N}(\mu, QQ^T = UD^2U^T)$$

Dieser Modelltyp wird als "PCA Shape Model" oder "3D Morphable (Facial Shape) Model" bezeichnet und wurde von verschiedenen Forschungseinrichtungen, auf Basis unterschiedlicher Scans implementiert (siehe zum Beispiel die Veröffentlichung von Blanz, Vetter, "A Morphable Model for the Synthesis of 3D Faces", SIGGRAPH: Proceedings of the 26th Annual Conference on Computer Graphics..., 1999, https://gravis.dmi.unibas.ch/Sigg99.html). Typischerweise existiert als Teil eines vollständigen "3D Morphable Model" oder kurz "3DMM", ein entsprechender Satz von Ausgangspositionen und relativen Vektoren in einem Farbraum für die Textur des Gesichts, durch welche sich im Zusammenspiel mit den Geometrieinformationen realistische Abbildungen erzeugen lassen.

In einer weiteren, alternativen Ausführungsform wird das geometrische Modell als Gaußprozess über einem Definitionsbereich $\Omega$ beschrieben, durch dessen Elemente sich jeweils semantisch entsprechende Positionen des Modells referenzieren lassen. Dies sind zum Beispiel bestimmte 3D-Koordinaten eines Referenzobjekts oder 2D-Oberflächenkoordinaten. Der Gaußprozess ist durch die dreidimensional vektorielle Mittelwertfunktion $\mu(\chi_i)$ und die 3x3 matrixwertige Kovarianzfunktion $\Sigma(\chi_i, \chi_j)$ definiert, die, analog zum p-dimensionalen Mittelwert-Vektor $\mu$ beim 3DMM und einer pxp Kovarianzmatrix $\Sigma$ über den diskreten Daten, über den kontinuierlichen bzw. interpolierten Daten gegeben sind. Die Parameter $\chi_i$, $\chi_j \in \Omega$ identifizieren dabei die Modellpositionen, analog zu den Vertexindizes (bei dieser Betrachtung sei eine 3x3-Blockstruktur der Matrix zur Handhabung dreidimensionaler Koordinaten vorausgesetzt). Analog zum 3DMM kann im Rahmen des Gesamtmodells ein weiterer Gaußprozess mit Farbinformationen existieren.

**Analyse der Fehlerstruktur der Merkmalsentsprechungen**

Die Grundidee der Erfindung, die Fehlerstruktur der Merkmalsentsprechungen zu untersuchen, beruht auf der an sich bekannten Erkenntnis, dass Verfahren der Merkmalserkennung nicht immer exakte Ergebnisse liefern. Vor allem bei Gewinnung von 3D-Koordinaten aus 2D-Einzelbildern wird deutlich, dass die gewonnenen Informationen zum Teil nur in sehr ungenauer Form bzw. gar nicht in der Eingabe vorhanden sind, es sich bei diesen demnach teilweise bzw. in ihrer Gänze um Annahmen handelt, die beispielsweise auf in einem Training gewonnenen Erfahrungswerten beruhen und, je nach Position und Richtung, die Realität mehr oder weniger stark approximieren. Hinzu kommt, dass selbst 2D-Koordinaten von "Facial Landmarks" nicht immer exakt identifizierbar sind. Zum einen kann die Merkmalserkennung in die Irre geführt werden, zum Beispiel durch Gesichtshaar oder Verwechslung einer Hautfalte am Hals mit dem Kinn ("Doppelkinn"), falsche Interpretation eines Teils des Hintergrunds als Gesichtsmerkmal und/oder aufgrund ungünstiger Beleuchtung, zum anderen ist bereits die Definition einiger Merkmalspositionen bzw. deren Markierung in den Trainingsdaten nicht räumlich fix und abhängig von der abgebildeten Ansicht oder nur ungenau unter etwas Ermessensspielraum möglich. Letzteres ist vor Allem bei Merkmalspunkten entlang der Konturlinien der Seitenpartien des Gesichts in horizontaler bzw. vertikaler Richtung oft der Fall.

Um die aus mehreren Bildern gewonnenen Informationen unter einem Zugewinn an Genauigkeit zu einem 3D-Modell kombinieren zu können, wird erfindungsgemäß das in der Fehlerstruktur abgebildete Verhalten der Merkmalserkennung jeweils unter bestimmter Ansicht der Kamera auf das Objekt berücksichtigt, welches insbesondere anhand einer Vielzahl von Bildern analysiert werden kann, zu denen die Maße der abgebildeten menschlichen Köpfe und ein exaktes, rechnerisches Modell der Abbildung bekannt sind. Als Ergebnis wird die (partielle oder vollständige) Fehlerstruktur der Entsprechungen von Merkmalspositionen im Zielmodell gelernt, durch welche die Aussagekraft der Merkmalskoordinaten über die räumliche Form des Kopfes aus einer bestimmten Ansicht charakterisiert wird.

Erfindungsgemäß wird die Fehlerstruktur der Entsprechungen der Merkmalspositionen im Zielmodell a priori erstellt, indem das perspektivabhängige Verhalten der Merkmalserkennung jeweils unter bestimmter Ansicht der Kamera auf das Objekt anhand einer Vielzahl von Trainingsbildern, zu denen die Maße der abgebildeten menschlichen Köpfe und ein exaktes, rechnerisches Modell der Abbildung bekannt sind, analysiert wird. Insbesondere wird die zu analysierende Vielzahl von Trainingsbildern in Ausführungsformen

a) mittels Computergrafik synthetisiert, insbesondere auf der Grundlage eines statistisch verformbaren dreidimensionalen Gesichtsmodells oder Kopfmodells und/oder einer Sammlung von bekannten Gesichts- und/oder Kopfformen realer Personen,
und/oder

b) aus mittels Kameras erfasster Bilder realer Person zusammengestellt, bei denen die dreidimensionale Gesichts- und/oder Kopfform, Kameraposition und Perspektive bekannt sind.

In der ersten Alternative werden die Bilder für diese Analyse via Computergrafik synthetisiert. Anhand eines statistischen verformbaren 3D-Gesichtsmodells lassen sich statistisch realistische Gesichter erzeugen und unter bekannter Abbildung rendern. Alternativ zum statisch verformbaren Modell lassen sich gerenderte Vorlagen auch auf der Grundlage einer Sammlung von Gesichts- und/oder Kopfformen realer Personen erzeugen, die bereits zuvor vermessen worden waren. Besonders attraktiv an diesem Ansatz ist dabei der geringe Aufwand im Vergleich mit der Erfassung der Daten von reellen Personen und die Möglichkeit der systematischen Schaffung von Rahmenbedingungen, die denen der zur 3D-Rekonstruktion verwendeten Bilderfassung (siehe unten) entsprechen, wie zum Beispiel geringfügige Variation der Ansicht, sowie Variation der perspektivischen Projektion, Lichtverhältnisse und Bildhintergründe. Vorzugsweise wird in diesem Fall ein verformbares Kopfmodell verwendet, welches Bilder außerhalb der linearen Hülle der Trainingsmenge des Zielmodells erzeugen kann, zum Beispiel durch eine Implementierung auf Basis von 3D-Scans außerhalb der Trainingsmenge oder durch probabilistische Ansätze.

Die Alternative der Verwendung von realen Bildern echter menschlicher Köpfe, deren exakte Form bekannt ist oder zu diesem Zweck erfasst wird bietet den Vorteil, dass die Lerngrundlage des verwendeten Bildmaterials realistischer ist als bei synthetisierten Lernvorlagen.

In einer Ausführungsform werden bei der Erstellung der Fehlerstruktur Abstandsvektoren der Merkmalskoordinaten aus den Trainingsbildern gegenüber den entsprechenden Punkten im dreidimensionalen Modell erfasst. Insbesondere werden geeignete Entsprechungen der Merkmalspositionen in einer individuellen Anpassung des Zielmodells gefunden. Dies gilt insbesondere, sofern solche Entsprechungen nicht bereits dadurch vorhanden sind, dass die Merkmalspositionen am Zielmodell definiert sind, also das Zielmodell zur Konstruktion der Merkmalserkennung verwendet wurde.

Vorzugsweise wird als optimale Entsprechung einer Merkmalsposition im Zielmodell diejenige Entsprechung mit der geringsten Varianz des Abstands gefunden. Wenn keine inhärente Entsprechung besteht, wird in Ausführungsformen eine diskrete Menge an ModellPositionen, wie zum Beispiel die Vertices eines Polygonnetz-Modells, als Kandidatensatz herangezogen, wobei einer der Kandidaten als Entsprechung der jeweiligen Merkmalsposition nach Berechnung der Varianz ausgewählt werden kann. Insbesondere kann in Ausführungsformen das Umfeld der besten Kandidaten für jeweils einen Punkt oder die angrenzende Fläche rekursiv unterteilt werden, um weitere Kandidaten zu erhalten und zu untersuchen, und somit den jeweiligen Punkt der optimalen Entsprechung genauer zu lokalisieren.

Eine Marginalisierung des Zielmodells, bzw. der Entsprechungen der Merkmalspositionen, kann durch Matrizen $M_i$ zu den einzelnen Ansichten notiert werden, deren p Spalten den Vertices im 3D-Modell und deren Zeilen den Merkmalspositionen entsprechen. Wenn die Entsprechungen der Merkmalspositionen eine Auswahl der diskreten Punkte des Modells ist, handelt es sich bei M um eine Permutationsmatrix. Beispielsweise in dem Fall, dass die Oberfläche des 3D-Modells als Dreiecksnetz über den Vertices definiert ist, kann ein beliebiger Punkt auf der Oberfläche des 3D-Modells durch eine Zeile mit bis zu drei von Null verschiedenen Elementen beschrieben werden, nämlich den normierten baryzentrischen Koordinaten an den Spaltenpositionen der entsprechenden Vertices des umschließenden Dreiecks. Die Operation dieser großen, spärlich besetzten Matrix kann in der Praxis einfach auf der Basis einer sehr viel kompakteren Datenstruktur effizient implementiert werden.

Mathematisch wird die Fehlerstruktur durch eine Kovarianzmatrix über den Koordinatenkomponenten der Abstandsvektoren beschrieben. Diese Matrix kann durch ihre quadratische Natur bei Berücksichtigung vieler Merkmalspositionen jedoch sehr groß werden, so dass kompaktere Repräsentationen in der Praxis sinnvoller sein können, wie zum Beispiel die insbesondere dimensionsreduzierten Daten der Messung selbst, oder eine der Fehlerstruktur entsprechenden Whitening-Matrix, die weiter unten besprochen wird.

In Ausführungsformen umfasst die Formulierung von geometrischen Einschränkungen für die Anpassung des Zielmodells ein Übertragen der Koordinaten der erfassten Gesichtsmerkmale in ein einheitliches kameraunabhängiges Koordinatensystem. Ebenso sind die Abstandsvektoren vorzugsweise in ein von der Ansicht unabhängiges Referenzkoordinatensystem transformiert, wie zum Beispiel das einer Frontalansicht. Wenn das Zielmodell Koordinaten definiert, bietet sich das dafür das lokale Koordinatensystem dieser an.

Erfindungsgemäß umfasst bzw. bedeutet die Dekorrelation der geometrischen Einschränkungen bei der Anpassung des dreidimensionalen Modells, dass die Einschränkungen, insbesondere entlang bestimmter Richtungen, und/oder gemäß ihres statistischen Zusammenhangs, gewichtet werden. Die Gewichtung und die räumliche Orientierung sind die geometrische Interpretation der Dekorellation durch eine, gegebenenfalls partielle, Fehlerstruktur. Gewichtung ist Dekorellation, nämlich die Verwendung eines einheitlichen Fehlermaßes, und dadurch die Minimierung von Varianz statt Millimetern. Die Berücksichtigung dieser Gewichtung in bestimmten räumlichen Orientierungen ist ebenfalls eine Berücksichtigung von Kovarianz zwischen einzelnen Koordinatenkomponenten. Wird eine noch vollständigere Fehlerstruktur verwendet, wird Kovarianz zwischen 3D-Punkten berücksichtigt, im Extremfall sogar zwischen Messpunkten in verschiedenen Bildern. Letzteres ist vor allem dann sinnvoll, wenn die Kameraansichten vorab bekannt sind.

Insbesondere bei Verwendung zweidimensionaler Merkmalskoordinaten kann die fehlende Tiefeninformation im Rahmen der Analyse durch Rückprojektion auf das Modell gewonnen werden, zum Beispiel durch Schnitte des 3D-Modells mit Strahlen durch die jeweiligen Pixel gemäß der Projektion oder durch Auslesen des Tiefenpuffers eines dafür geeigneten Renderers. Alternativ werden bei Verwendung zweidimensionaler Merkmalskoordinaten nur zweidimensionale Abstände verwendet, zum Beispiel zwischen Merkmalskoordinaten in Pixeln und 2D-Projektionen der entsprechenden Modellkoordinaten ins Koordinatensystem des jeweiligen Bildes.

In Ausführungsformen wird bei der Erstellung der Fehlerstruktur bei Verwendung zweidimensionaler Merkmalskoordinaten

a) eine fehlende Tiefeninformation durch Rückprojektion auf das Modell gewonnen, insbesondere durch Schnitte des 3D-Modells mit Strahlen durch die jeweiligen Pixel gemäß der Projektion oder durch Auslesen eines Tiefenpuffers eines dafür geeigneten Renderers, oder

b) es werden zweidimensionale Abstände zwischen Merkmalskoordinaten und 2D-Projektionen der entsprechenden Modellkoordinaten ins Koordinatensystem des jeweiligen Bildes verwendet,

wobei insbesondere Merkmalspositionen, die in Bildern der jeweiligen Ansicht durch andere Teile des Kopfes verdeckt sind, von der Berücksichtigung ausgeschlossen werden. Ein verdeckter 2D-Landmark kann beispielsweise dadurch erkannt werden, dass die nächste Rückprojektion aus Sicht der Kamera räumlich zu weit von einer plausiblen Entsprechung, die zum Beispiel auf der Basis einer Frontalansicht ermittelt wurde, entfernt ist. Merkmalspositionen die fälschlicherweise weit außerhalb des Kopfes liegend gefunden werden, sollten in der jeweiligen Ansicht in jedem Fall ausgeschlossen werden. Ein verdeckter 3D-Landmark kann beispielsweise dadurch erkannt werden, dass die nächste Rückprojektion seiner Projektion aus Sicht der Kamera vom Ursprungspunkt verschieden, also weiter als der zu erwartende Fehler entfernt ist. Inwieweit die hier genannten Ausschlusskriterien im Rahmen einer konkreten Implementierung sinnvoll sind, hängt vom Verhalten der Merkmalserkennung ab, welches wiederum durch die Qualität der Trainingsdaten bestimmt wird.

Zur Bilderfassung unter systematischen Rahmenbedingungen (siehe oben) werden in Ausführungsformen die mehreren Bilder mit einer Kameraanordnung mit bekannten Positionen und Blickrichtungen mehrerer Kameras oder mit einer Kamera erstellt, wobei insbesondere eine Tiefenkamera verwendet wird, um die aufgenommenen Bilder mit Tiefeninformationen anzureichern.

Wenn zunächst nur ein Bild erstellt und die Verfahrensschritte a) bis d) auf das eine Bild angewendet werden, ist in Ausführungsformen vorgesehen, an einem oder mehreren nachfolgend aufgenommenen Bildern des gleichen Kopfes die Verfahrensschritte a) bis d) auszuführen und damit das zunächst angepasste Zielmodell weiter anzupassen. Dies kann so erfolgen, dass neue Bilder verwendet werden, sobald sie erzeugt werden, ohne dass dem Benutzer mitgeteilt wird, dass weitere Bilder notwendig sind, oder dem Benutzer wird mitgeteilt, dass eine erste Anpassung des Zielmodells erfolgt ist und für eine Verfeinerung weitere Bilder gemacht werden sollten, gegebenenfalls mit einer Menüführung, aus welchen Perspektiven noch Bilder benötigt werden und gegebenenfalls leitenden Hinweisen zum Abstand, zur Beleuchtung und weiterer Parameter. Auf diese Weise wird die Erzeugung von mehreren Bildern aus mehreren Perspektiven über einen kurzen oder längeren Zeitraum gestreckt.

In dem Fall, dass die mehreren Bilder mit einer unbekannten Kamera erstellt werden, wird vorzugsweise eine approximierte Kalibrierung der unbekannten Kamera durchgeführt und werden die Kameraorientierungen zu den mehreren Bildern bestimmt. Bei Bilderfassung durch eine unbekannte Kamera ist es weiterhin vorteilhaft, die Messung über Intervalle ähnlicher Rotationswinkel der Kamera auf das Objekt durchzuführen. Bei der Rekonstruktion wird dann die passende Statistik für das jeweilige Eingabebild ausgewählt. Um verfahrensbedingte Ungenauigkeit bei Bestimmung der jeweiligen Kameraorientierung in Betracht ziehen zu können, werden in Ausführungsformen überlappende Intervalle verwendet.

Bei Verwendung eines bekannten Kamerasystems werden in Ausführungsformen auch Kovarianzen zwischen den Positionen in den einzelnen Ansichten berücksichtigt, wodurch die Auswirkung von Aliasing-Effekten der Merkmale bezüglich der gewählten Entsprechungen auf die Rekonstruktion verringert werden kann.

Alternativ erfolgt in Ausführungsformen eine partielle Berücksichtigung der Kovarianz, zum Beispiel innerhalb der einzelnen Bilder oder jeweils über die Koordinatenkomponenten jeder Position, oder nur der Varianz der einzelnen Koordinatenkomponenten. In Matrixnotation entsprechen diese Fälle einer Blockdiagonalmatrix bei zusammenhängender Notation der Koordinatenkomponenten bzw. einer Diagonalmatrix. Durch Behandlung der vektoriellen Abstände entlang der Koordinatenachsen als jeweils eigenständige multivariate Verteilung kann eine geometrisch elliptoide Streuung abgeschätzt werden. Die ausschließliche Betrachtung der Varianzen beschreibt eine achsenfluchtende Näherung. Wird zusätzlich die Kovarianz zwischen zusammengehörenden Koordinatenkomponenten berücksichtigt, so lässt sich zusätzlich unter anderem die Orientierung der elliptoiden Form bestimmen. Dies ermöglicht eine bessere Abgrenzung verlässlicher von weniger verlässlichen Informationen, was am Beispiel einer schmalen, diagonal orientierten Verteilung besonders deutlich wird: In diesem Fall sind die Varianzen entlang der Koordinatenachsen ähnlich, bei entsprechend orientierter Betrachtung ist jedoch in einer Richtung eine viel genauere Lokalisierung gegeben.

Eine Hauptkomponentenanalyse (oder auch PCA für Englisch "Principal Component Analysis") erlaubt die Bestimmung der zueinander orthogonalen und minimal korrelierten Richtungen und der entsprechenden Standardabweichungen entlang dieser Richtungen. Dies ermöglicht die Formulierung einer varianzhomogenen, direktionalen Gewichtung entlang der Hauptachsen der Verteilung. Die Richtungen der Hauptachsen geteilt durch ihre Längen (beschrieben durch die entsprechenden Standardabweichungen) sorgen für eine Projektion entlang der Richtung und einer Normierung der jeweiligen Fehlergröße auf Standardabweichungen. Eine PCA kann zum Beispiel durch Anwendung von Singulärwertzerlegung (oder auch SVD für "Singular Value Decomposition") auf eine Datenmatrix von Punktabständen $X_W$ über $m$ Spaltenvektoren, die jeweils eine Konkatenation der Koordinatenkomponenten der zu berücksichtigenden vektoriellen Abstände sind, und einer anschließenden Skalierung einer Diagonalmatrix $D_W$ sehr effizient, numerisch stabil und ohne direkte Berechnung der potentiell großen Kovarianzmatrix gewonnen werden. Eine Notation hierzu ergibt sich durch die folgenden Gleichungen:

$$X_{W_i} = U_{W_i}\sqrt{m}D_{W_i}V_{W_i}^{T} \qquad |\ \text{SVD}$$

$$\Sigma_{W_i} = \frac{1}{m}X_{W_i}X_{W_i}^{T} = U_{W_i}D_{W_i}^{2}U_{W_i}^{T} \quad |\ \text{Kovarianz}$$

$$\Sigma_{W_i}^{-1} = U_{W_i}D_{W_i}^{-2}U_{W_i}^{T} = W_i^{T}W_i$$

$$W_i = D_{W_i}^{-1}U_{W_i}^{T} \qquad |\ \text{Whitening}$$

Dabei ist die Matrix $U_W$ die Orthonormalbasis über den Hauptachsen, deren Richtungen durch die Spaltenvektoren gegeben sind. Die Whitening-Transformation ($W_i$) ist eine lineare Transformation, bei der ein Vektor von Zufallsvariablen mit bekannter Kovarianzmatrix in eine Reihe von neuen Variablen mit dem Ziel umgewandelt wird, dass die einzelnen neuen Variablen unkorreliert sind und jeweils eine Varianz von 1 haben.

Die der Erfindung zugrundeliegende Aufgabe wird auch durch ein System zur dreidimensionalen Rekonstruktion wenigstens eines Teils eines menschlichen Kopfes aus mehreren Bildern, die wenigstens den zu rekonstruierenden Teil des menschlichen Kopfes aus verschiedenen Perspektiven zeigen, gelöst, umfassend eine Datenverarbeitungsanlage, die ausgebildet und eingerichtet ist, ein zuvor beschriebenes erfindungsgemäßes Verfahren durchzuführen. In Ausführungsformen umfasst das System ferner eine Aufnahmevorrichtung, die ausgebildet und eingerichtet ist, die mehreren Bilder, die wenigstens den zu rekonstruierenden Teil des menschlichen Kopfes aus verschiedenen Perspektiven zeigen, zu erzeugen.

In Ausführungsformen umfasst die Aufnahmevorrichtung wenigstens eine Tiefenkamera, die ausgebildet ist, neben einer Lichtintensität einen Abstand einzelner Bildpunkte zu messen. Mit der Tiefenkamera ist es möglich, die aufgenommenen Bilder mit Tiefeninformationen anzureichern.

Das System verwirklicht durch Bezug auf das Verfahren die gleichen Merkmale, Eigenschaften und Vorteile wie das erfindungsgemäße Verfahren.

Weitere Merkmale der Erfindung werden aus der Beschreibung erfindungsgemäßer Ausführungsformen zusammen mit den Ansprüchen und der beigefügten Zeichnung ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnung beschrieben, wobei bezüglich aller im Text nicht näher erläuterten erfindungsgemäßen Einzelheiten ausdrücklich auf die Zeichnung verwiesen wird.

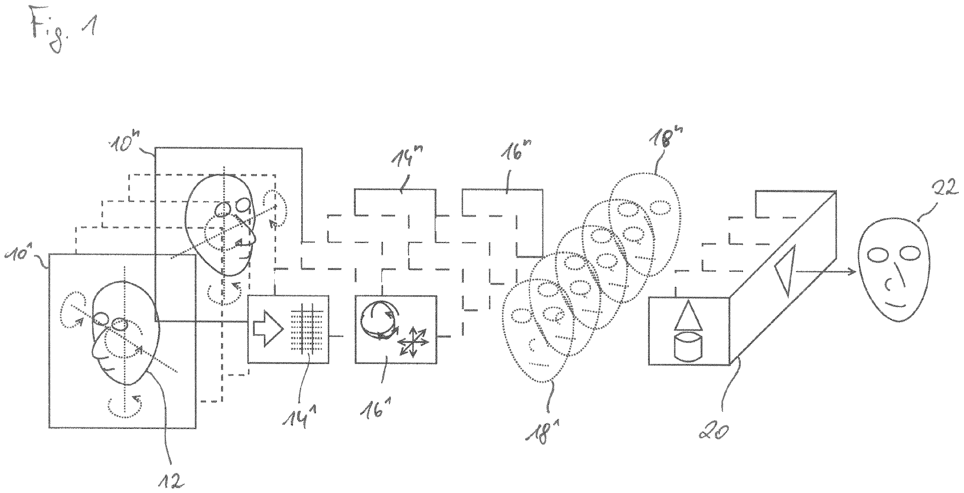

In Figur 1 ist der Ablauf des erfindungsgemäßen Verfahrens schematisch von links nach rechts fortschreitend abgebildet. Zunächst werden mehrere Bilder $10^1$ bis $10^n$ eines Gesichts oder Kopfes 12 aus verschiedenen Perspektiven gemacht, entweder mit einer beweglichen Kamera, oder mit einem System aus Kameras mit bekannten Positionen und Ausrichtungen. Anschließend wird an der Mehrzahl der Bilder $10^1$ bis $10^n$ jeweils eine Merkmalserkennung $14^1$ bis $14^n$ durchgeführt, bei der in den zweidimensionalen Bildern $10^1$ bis $10^n$ Gesichtsmerkmale erkannt und deren Positionen im Bild erfasst werden.

Nach der Merkmalserkennung erfolgt, sofern unbekannt, zu jedem Bild $10^1$ bis $10^n$ eine Bestimmung der jeweiligen Abbildung $16^1$ bis $16^n$, also derjenigen Abbildungsparameter, welche die jeweiligen kameraabhängigen perspektivischen Projektionen beschreiben, in anderen Worten, der jeweiligen Orientierung der Kamera in den einzelnen Bildern, insbesondere einschließlich Kalibrierung der Kamera, sofern diese nicht vorab bekannt sind. Sobald die Abbildungen bekannt sind, können die gefundenen Gesichtsmerkmale in ein einheitliches Koordinatensystem transformiert werden ($18^1$ bis $18^n$). Nach diesem Schritt sind Lage und Orientierung des Kopfes 12 in den Bildern $10^1$ bis $10^n$ zumindest näherungsweise bekannt, und es ist möglich, anhand der Positionen der erfassten Gesichtsmerkmale aus den Bildern $10^1$ bis $10^n$ geometrische Einschränkungen für das anzupassende Zielmodell 22 zu formulieren. Nachdem die geometrischen Einschränkungen formuliert sind, wird das dreidimensionale Zielmodell 22 in einer Optimierung an die geometrischen Einschränkungen angepasst, um den aufgenommen Kopf 12 bestmöglich nachzubilden.

Dieser grob umschriebene Ablauf wird im Folgenden beispielhaft näher erläutert.

**Bilderfassung**

In einer Ausführungsform werden die Eingabebilder für das Verfahren durch eine unkalibrierte Kamera erzeugt, zum Beispiel mit der Kamera eines Mobiltelefons oder Laptop-Computers. In diesem Fall kann der Maßstab der 3D-Rekonstruktion durch eine zusätzliche Messung eines Referenzobjekts bekannter Größe mit gleichem Kameraabstand wie der Kopf, zum Beispiel einer auf der Stirn platzierten Checkkarte, ermittelt werden, oder durch eine Annahme, zum Beispiel bezüglich der Kopfbreite, approximiert werden. Dieser Umstand begründet sich dadurch, dass bei perspektivischer Projektion im Allgemeinen ein großes, entferntes Objekt nicht von einem nahen, formgleichen Objekt kleineren Maßstabs unterschieden werden kann. Diese Ambiguität besteht ebenfalls für ein System mit mehreren Bildern von verschiedenen Ansichten, sofern keine weiteren Informationen für eine Kopplungsbedingung vorliegen.

Auch die Orientierung des in den Bildern $10^1$ bis $10^n$ erfassten Kopfes 12 ist in dieser Ausführungsform typischerweise unbekannt. Unter Voraussetzung des Maßstabs oder einer entsprechenden Annahme und des ungefähren Abstands des Kopfes 12 von der Kamera lässt sich in Ausführungsformen die perspektivische Projektion der Kamera aus symmetrischen Merkmalspositionen in einer Frontalansicht des Kopfes 12 durch einfache Trigonometrie approximieren. Eine Frontalansicht kann zum Beispiel durch systembedingte Benutzerführung erzeugt und durch Bestimmung der Kameraorientierung verifiziert werden, oder alternativ durch diese in einer Menge von Eingabebildern, beispielsweise den Einzelbildern einer Videoaufnahme, identifiziert werden.

Da dies nur zu einer groben Näherung führt, wird diese vorzugsweise durch geeignete Verfahren verfeinert, durch die Daten aller vorliegenden Bilder berücksichtigt werden können. Diese Verfahren erfordern als Eingabe zweidimensionale Merkmalskoordinaten und Koordinaten der entsprechenden Punkte in einem 3D-Modell, die aber im Allgemeinen nur entweder in Form von Mittelwerten ohne Kameraorientierung oder, falls verwendet, als 3D-Merkmalskoordinaten unter der Annahme einer orthografischen Projektion gegeben sind. Insofern müssen diese Verfahren mehrfach unter Aktualisierung der Problemstellung wiederholt und abwechselnd oder zusammen mit der Bestimmung der Kameraorientierung und optional der Anpassung 20 des Zielmodells 22 ausgeführt werden.

In einer alternativen Ausführungsform wird eine Aufnahmevorrichtung mit mehreren Kameras verwendet, die initial kalibriert werden können, und deren Orientierungen im Raum zueinander bekannt sind. Die Kamerakalibrierung ermittelt eine zahlenmäßige Repräsentation der intrinsischen Eigenschaften der jeweiligen Kamera, nämlich vor allem eine Quantifizierung der querschnittsmäßigen Ausdehnung des erfassten (typischerweise pyramidalen) Bereichs bei zunehmenden Abstand. Zusätzlich kann das Verhalten der Linse durch weitere Parameter für ein entsprechendes rechnerisches Modell noch genauer beschrieben sein.

Wenn insbesondere zusätzlich der Abstand des Kopfes 12 von den Kameras bekannt ist, zum Beispiel aus Messung von einem Tiefensensor oder einer fest positionierten Auflagefläche für das Kinn, lässt sich damit der Maßstab bereits bestimmen, wobei die Genauigkeit vom Winkel der perspektivischen Projektion und der Genauigkeit des Abstands abhängt. Alternativ kann der Abstand des Kopfes 12 und dadurch der Maßstab für das Zielmodell 22 durch paarweise Triangulierung identischer Punkte in den Eingabebildern $10^1$ bis $10^n$ ermittelt werden.

Insbesondere ist es möglich, die Merkmalserkennung $14^1$ bis $14^n$ speziell für die jeweilige Kamera zu trainieren, um deren Effektivität zu steigern, insbesondere unter Berücksichtigung weiterer, realisierungsabhängiger Bedingungen, zum Beispiel bezüglich der Beleuchtung oder Beschaffenheit des Hintergrunds. Wird dabei insbesondere eine Merkmalserkennung, die 3D-Koordinaten liefert, für ein Objekt in festem Abstand trainiert, kann eine maßstabsgetreue Gewinnung der Koordinaten auch maschinell gelernt werden.

Insbesondere kann die Aufnahmevorrichtung zusätzlich mit einer Tiefenkamera ausgestattet sein, um die Merkmalskoordinaten einer oder mehrerer Ansichten mit echten Tiefeninformationen anzureichern. Die Verwendung vieler dichter Merkmalspositionen ist in diesem Zusammenhang vorteilhaft. Genauigkeit und Auflösung des Sensors lassen sich bei Erfassung der Fehlerstruktur beispielsweise durch Addition von normalverteiltem Pseudozufall bzw. Rundung simulieren und damit im Rahmen der Rekonstruktion berücksichtigen.

## Bestimmung der Kameraorientierung

Die bei der Merkmalserkennung $14^1$ bis $14^n$ aus den Bildern $10^1$ bis $10^n$ erfassten Merkmalskoordinaten liegen in Koordinatensystemen vor, die von dem des Zielmodells verschieden sind. Damit die Informationen sinnvoll kombiniert werden können, muss also die rechnerische Abbildung für jedes Bild $10^1$ bis $10^n$ bekannt sein.

Die intrinsischen Parameter der Kamera können, wie zuvor ausgeführt, aufgrund einer Kalibrierung oder Approximation als bekannt angenommen werden. Insbesondere bei Verwendung von 3D-Koordinaten, die in einer orthografischen Projektion ermittelt wurden, ist eine Korrektur der Projektion bereits erfolgt.

Wenn die Kameraorientierungen nicht bereits systembedingt bekannt sind, können sie mit an sich bekannten Verfahren ermittelt werden. Als Eingabe sind die zwei- oder dreidimensionalen Merkmalskoordinaten und entsprechende 3D-Mittelwertkoordinaten im Koordinatensystem des Referenzmodells, und, im zweidimensionalen Fall, auch die intrinsischen Parameter der Kamera gegeben, woraus Translation und Rotation berechnet werden. Vereinfachte Rechenwege unter Ausnutzung von Symmetrien zu diesem Zweck sind in den Rahmen der vorliegenden Erfindung mit einbezogen.

Insbesondere kann eine Statistik der Fehlerstruktur im Rahmen solcher Verfahren berücksichtigt werden. Dafür kann zunächst eine Statistik über ein weites Intervall verwendet werden, das die nominale Spanne aller zu erwarteten Kamerarotationen abdeckt, um dann unter Kenntnis einer Näherung der Kameraorientierung eine präzisere Statistik heranzuziehen und den verwendeten Algorithmus zu wiederholen. Das Verfahren kann mehrfach unter Aktualisierung der Problemstellung wiederholt werden und wird abwechselnd oder zusammen mit der Anpassung des Zielmodells durchgeführt. Insbesondere kann dabei ein Abgleich mit Computergrafik verwendet werden.

Insbesondere bei bekannten relativen Kameraorientierungen können mehrere Bilder $10^1$ bis $10^n$ für die Eingabe herangezogen werden, wobei das Referenzmodell gemäß der, zu einer beliebig gewählten, einheitlichen Orientierung relativen Orientierungen der jeweiligen entsprechenden Kamera transformiert wird. Die ermittelte Orientierung bezieht sich dann auf die beliebig gewählte Referenzorientierung. Die Orientierungen der einzelnen Kameras unter Berücksichtigung der Rigidität ihrer Platzierungen lässt sich daraus durch Rücktransformation einfach ermitteln.

## Modellanpassung

Der folgende Abschnitt formuliert die erfindungsgemäße Anpassung von Zielmodellen 22 unterschiedlichen Typs. Die folgenden Ausführungen dienen der Erklärung verschiedener Ausführungswege, das erfindungsgemäße Verfahren ist aber nicht auf diese Ausführungsformen beschränkt.

Die 3D-Merkmalskoordinaten werden unter Kenntnis der Abbildung gemäß der perspektivischen Projektion korrigiert und ins lokale, von der Kamera unabhängige Koordinatensystem des 3D-Zielmodells 22 transformiert. Weiterhin beziehen sich, je nach Verfahrensvariante, Hauptachsen oder Kovarianz der Statistik aus der Analyse der Merkmalsentsprechungen vorzugsweise auf dasselbe Koordinatensystem.

Wenn zweidimensionale Merkmalskoordinaten verwendet werden, können alternativ die individuellen Problemstellungen jeweils einer den Abbildungen der jeweiligen Bilder $10^1$ bis $10^n$ entsprechenden Ähnlichkeitstransformation unterzogen werden, so dass die Tiefenachsen jeweils in Kamerarichtung der jeweiligen Bilder $10^1$ bis $10^n$ ausgerichtet sind. Die Einschränkungen entlang dieser Achsen können dann gestrichen werden. Dies gilt analog für den Fall nur eines einzelnen Bildes, welches zunächst aufgenommen wird, bevor weitere Bilder später hinzukommen.

Insbesondere, wenn die Merkmalskoordinaten zweidimensional und die Messungen zur Analyse der Fehlerstruktur der Merkmalsentsprechungen dreidimensional sind, lassen sich 2D- und 3D-Merkmalskoordinaten auch kombiniert verwenden, beispielsweise bei Verwendung von 2D-Merkmalserkennung und einer Tiefenkamera.

In einer Ausführungsform werden zur Anpassung des Zielmodells 22 dichte Punktwolken gemittelt. Gesucht ist ein Vektor $x$ mit den optimalen Koordinaten für die Punkte im 3D-Zielmodell 22. Ein Vektor $o$ beschreibt die Beobachtung aus den Bildern $10^1$ bis $10^n$ als Konkatenation der transformierten Merkmalskoordinaten. Es kann eine sog. Whitening-Transformation $W$ (s. o.) so aufgestellt werden, dass ihre Spaltenanordnung entsprechend dem Beobachtungsvektor $o$ gewählt ist. Die Reihenfolge der Zeilen ist dabei beliebig. Die Matrix kann, je nach Realisierung, direkt aus den, insbesondere dimensionsreduzierten, Analysedaten bzw. der Fehlerstruktur in Form einer Datenmatrix von Punktabständen berechnet werden, oder alternativ unter teilweiser Berücksichtigung der Kovarianz als Blockstruktur aus den Ergebnissen getrennter Berechnungen gebildet werden. Beispielsweise bei Bilderfassung durch eine unbekannte Kamera können vorberechnete Daten auch in Abhängigkeit mindestens eines Rotationswinkels der Kamera nachgeschlagen werden.

Da im Allgemeinen Merkmalskoordinaten aus mehreren Bildern $10^1$ bis $10^n$ zu einem Punkt vorliegen, müssen sich in der beschriebenen Ausführungsform die Einschränkungen (Zeilen der Matrix $W$) bezüglich dieser jeweils auf denselben Punkt im Vektor $x$ der gesuchten Koordinaten beziehen. Diese Selektion wird durch die Matrix $A$ notiert. In anderen Worten vervielfältigt die Matrix $A$ die Punktkoordinaten im Vektor $x$ gemäß ihren Entsprechungen im Beobachtungsvektor o. Wenn die Koordinaten einzelner Positionen in den Vektoren zusammenhängend notiert sind, hat diese Matrix eine Blockstruktur bestehend aus 2x2 oder 3x3 Identitätsmatrizen, je nach Dimensionalität der Merkmalskoordinaten:

$$\arg\min_{\boldsymbol{x}\in\mathbb{R}^p} \left\| WA\boldsymbol{x} - W\boldsymbol{o} \right\|_2^2$$

Hat, insbesondere unter teilweiser Berücksichtigung der Kovarianz, das Produkt $W A$ immer noch eine Blockstruktur, besteht das Optimierungsproblem aus isolierten Teilproblemen, die sich auch isoliert lösen lassen. Wenn zum Beispiel nur eine Kovarianz zwischen Koordinatenkomponenten individueller Positionen zur Gewinnung direktionaler Einschränkungen im dreidimensionalen Raum berücksichtigt wird, ergibt sich ein Teilproblem pro Position.

Die Bildung des Produkts der Matrix $W$ mit der spärlich besetzten Matrix $A$ kann in der Praxis, gesteuert durch eine sehr viel kompaktere Datenstruktur, effizient implementiert werden. Die Matrix $A$ wird hier zum Zweck einer bündigen Notation formuliert. Das gegebene lineare Kleinstquadrate-Problem ist mit Standardverfahren in geschlossener Form lösbar.

In einer alternativen Ausführungsform wird der Koeffiziententenvektor $\alpha$ mit $n$ Koeffizienten für ein 3DMM ("*3D morphable model*") gesucht, welches durch einen Vektor $\mu$ und eine Matrix $Q$ gegeben ist.

Der Beobachtungsvektor $o$ und die Whitening-Transformation $W$ entsprechen der zuvor diskutierten Ausführungsform.

$$\arg\min_{\boldsymbol{\alpha}\in\mathbb{R}^n} \left\| \begin{bmatrix} WMQ \\ \eta I_{n\times n} \end{bmatrix} \boldsymbol{\alpha} - \begin{bmatrix} W(\boldsymbol{o} - M\boldsymbol{\mu}) \\ \mathbf{0}_n \end{bmatrix} \right\|_2^2$$

Die Zeilen der Marginalisierungsmatrix $M$ können entsprechend der Elemente des Beobachtungsvektors $o$ gewählt werden. Dazu können die Matrizen $M_i$ zu den Ansichten in den Bildern unter Expansion zur Anwendung auf Vektoren, die sich durch ein Kronecker-Produkt mit einer 3x3 Identitätsmatrix notieren lässt, wenn die Vektoren zusammenhängend sind, zeilenweise gemäß der Entsprechung zusammengefügt werden.

Eine alleinige Minimierung von gewichteten Abständen kann dazu führen, dass als Ergebnis betragsmäßig sehr hohe Koeffizienten gewählt werden. Allerdings unterliegen die Koeffizienten bezüglich der als repräsentativ angenommenen Trainingsdaten einer homoskedastischen, also varianzhomogenen, Normalverteilung. Um diesem Umstand zu genügen, wird vorteilhafterweise eine Regularisierung des Optimierungsproblems vorgenommen. So können in einem Ausführungsbeispiel zusätzliche, zu den Koeffizienten proportional gewählte Fehlerterme hinzugefügt werden. Diese Maßnahme wird als Tikhonov-Regularisierung bezeichnet, die im konkreten Anwendungsfall aus der Bayesschen Berücksichtigung der durch das 3DMM beschriebenen a priori Wahrscheinlichkeit folgt.

Der Stellfaktor $\eta$ beschreibt den Grad der Berücksichtigung der durch das 3DMM beschriebenen a priori Wahrscheinlichkeit. Die Summen quadrierter, homoskedastisch normalverteilter Fehlerterme, wie die der Koeffizienten und der geometrischen Einschränkungen, unterliegen der Chi-Quadrat-Verteilung und werden gegen Null minimiert. Für eine gleichwertige Berücksichtigung der a priori Verteilung und einer bestimmten Anzahl an Freiheitsgraden in der Beobachtung $f$, kann der Stellfaktor anhand des Quotienten der Varianzen der beiden Chi-Quadrat-Verteilungen bezüglich des Nullpunkts gewählt werden:

$$\eta^2 = \sqrt{\frac{f^2+2f}{n^2+2n}} \approx \sqrt{\frac{f^2}{n^2}} = \frac{f}{n}$$

Das regularisierte lineare Optimierungsproblem lässt sich durch Standardverfahren in geschlossener Form lösen, zum Beispiel durch geeignete Bidiagonalisierung oder durch Singulärwertdekomposition der Matrix $W M Q$ und Anpassung der Singulärwerte zur Berücksichtigung der Regularisierung:

$$U_A \ \mathrm{diag}(\sigma_i)\ V_A^T = WMQ \qquad\qquad |\ \mathrm{SVD}$$

$$\boldsymbol{\alpha} = V_A \ \mathrm{diag}\left(\sqrt{\frac{\sigma_i}{\sigma_i^2 + \eta^2}}\right) U_A^T W(\boldsymbol{o} - M\boldsymbol{\mu}) \quad |\ \mathrm{RLS}$$

Der Positionen-Vektor $v_s(\alpha)$ (siehe oben), lässt sich als das Mittel eines konditionierten Modells auffassen:

$$\boldsymbol{\mu}_c = \boldsymbol{v}_s(\boldsymbol{\alpha}) = \boldsymbol{\mu} + Q\boldsymbol{\alpha}$$

Ein vollständiges a-posteriori-Modell lässt sich im Prinzip durch Eigendekomposition der Kovarianzmatrix berechnen. Eine Berechnung auf direkt diesem Weg kann in der Praxis jedoch die Grenzen der Realisierbarkeit sprengen. Eine Wiederverwendung der SVD erlaubt jedoch eine Reduktion des Problems auf die Eigendekomposition einer sym-metrischen $q \times q$ Matrix. Diese kann durch eine weitere, auf die Zerlegung dieser Matrix angewendete SVD berechnet werden:

$$\Sigma_c = \eta^2 Q((WMQ)^T WMQ + \eta^2 I)^{-1} Q^T$$

$$U_i D_i V_i^T = \eta D V_A \ \mathrm{diag}\left(\frac{1}{\sqrt{\sigma_i^2 + \eta^2}}\right) \qquad\qquad |\ \mathrm{SVD}$$

$$Q_c = U_c D_c, \ U_c = UU_i, \ D_c = D_i$$

Diese Berechnung der Koeffizienten eignet sich für PCA-basierte Modelle, Karhunen-Loeve-Expansionen von Gaußprozessen und lässt sich auf PPCA-Modelle ("PPCA" für *probabilistic principal component analysis*") übertragen.
In einer alternative Ausführungsform wird ein a-posteriori-Gaußprozess berechnet. Dieser lässt sich wie folgt formulieren:

$$\boldsymbol{\mu}_c(\boldsymbol{\chi}_i) = \boldsymbol{\mu}(\boldsymbol{\chi}_i) + \Sigma_g(\boldsymbol{\chi}_i)^T K_{gg}(\boldsymbol{o} - \boldsymbol{\mu}_g)$$

$$\Sigma_c(\boldsymbol{\chi}_i, \boldsymbol{\chi}_j) = \Sigma(\boldsymbol{\chi}_i, \boldsymbol{\chi}_j) - \Sigma_g(\boldsymbol{\chi}_i)^T K_{gg}\ \Sigma_g(\boldsymbol{\chi}_j)$$

$$K_{gg} = \eta^{-2}(\eta^{-2}\Sigma_{gg} + \Sigma_W)^{-1}$$

$$\boldsymbol{\mu}_g = (\mu(\boldsymbol{\chi}_i))_{\boldsymbol{\chi}_i \in \Omega_g} \qquad\qquad\qquad \in \mathbb{R}^{q \times d}$$

$$\Sigma_{gg} = (\Sigma(\boldsymbol{\chi}_i, \boldsymbol{\chi}_j))_{\boldsymbol{\chi}_i, \boldsymbol{\chi}_j \in \Omega_g} \qquad\qquad \in \mathbb{R}^{q \times q}$$

$$\Sigma_g(\boldsymbol{\chi}_i) = (\Sigma(\boldsymbol{\chi}_i, \boldsymbol{\chi}_j))_{\boldsymbol{\chi}_j \in \Omega_g} \qquad\qquad \in \mathbb{R}^{q \times d}$$

In dieser Form ist die Fehlerstruktur der Merkmalsentsprechungen durch die oben eingeführte Kovarianzmatrix $\Sigma_W$ gegeben. Die Folge $\Omega_g$ deutet dabei die Marginalisierung des Modells an und erstreckt sich über diejenigen Elemente, die den konkatenierten Merkmalskoordinaten $o$ entsprechen. Sie entspricht effektiv der Matrix $M$ in der vorigen Ausführungsform (die sich auf ein diskret-adressiertes Modell bezieht) für das kontinuierliche Modell. Die Dimensionalität der Merkmalskoordinaten wird mit $d$ notiert. Die Anwendung der Matrix $K_{gg}$ bildet den Kern der Regression.

Insbesondere lassen sich die Gaußprozesse über einem diskreten Definitionsbereich als vieldimensionale Normalverteilungen formulieren, wodurch die Mittelwert- und Kovarianzfunktionen über dem diskreten Definitionsbereich expandiert durch Matrizen repräsentiert werden.

Bezugszeichenliste

| | |
|---|---|
| $10^1$ - $10^{11}$ | Bild |
| 12 | Kopf |
| $14^1$ - $14^n$ | Merkmalserkennung |
| $16^1$ - $16^n$ | Bestimmung der Abbildung |
| $18^1$ - $18^n$ | Transformation in einheitliches Koordinatensystem |
| 20 | Anpassung des Zielmodells |
| 22 | Zielmodell |

**Patentansprüche**

1. Verfahren zur dreidimensionalen, insbesondere maßstabsgetreuen, Rekonstruktion wenigstens eines Teils eines menschlichen Kopfes (12) aus mehreren Bildern ($10^1$ - $10^n$), die wenigstens den zu rekonstruierenden Teil des menschlichen Kopfes (12) aus verschiedenen Perspektiven zeigen, umfassend die folgenden Verfahrensschritte:

   a) Anwenden einer Merkmalserkennung ($14^1$ - $14^n$) auf die mehreren Bilder ($10^1$ - $10^n$), bei der Gesichtsmerkmale und deren Koordinaten erfasst werden,
   b) Bestimmen von Abbildungsparametern zu den mehreren Bildern ($10^1$ - $10^n$), die die jeweiligen kameraabhängigen perspektivischen Projektionen der mehreren Bilder ($10^1$ - $10^n$) beschreiben,
   c) Formulierung von geometrischen Einschränkungen für die Anpassung eines dreidimensionalen Zielmodells (22) anhand der Positionen der erfassten Gesichtsmerkmale aus den mehreren Bildern ($10^1$ - $10^n$),
   d) Anpassen des dreidimensionalen Zielmodells (22) an die geometrischen Einschränkungen,

   **dadurch gekennzeichnet, dass** bei der Anpassung des Zielmodells (22) Daten einer wenigstens teilweise erfassten Fehlerstruktur der Entsprechungen der Merkmalspositionen im Zielmodell (22), welche das perspektivabhängige Verhalten der Merkmalserkennung abbildet, zur Dekorrelation der geometrischen Einschränkungen durch Gewichtung der geometrischen Einschränkungen entlang bestimmter Richtungen und/oder gemäß ihres statistischen Zusammenhangs verwendet werden, wobei die Fehlerstruktur der Entsprechungen der Merkmalspositionen im Zielmodell (22) a priori erstellt wird, indem das perspektivabhängige Verhalten der Merkmalserkennung ($14^1$ - $14^n$) jeweils unter bestimmter Ansicht der Kamera auf das Objekt anhand einer Vielzahl von Trainingsbildern, zu denen die Maße der abgebildeten menschlichen Köpfe und ein exaktes, rechnerisches Modell der Abbildung bekannt sind, analysiert wird.

2. Verfahren nach Anspruch 1, **dadurch gekennzeichnet, dass** die zu analysierende Vielzahl von Trainingsbildern

   a) mittels Computergrafik synthetisiert, insbesondere auf der Grundlage eines statistisch verformbaren dreidimensionalen Gesichtsmodells oder Kopfmodells und/oder einer Sammlung von bekannten Gesichts- und/oder Kopfformen realer Personen,
   und/oder
   b) aus mittels Kameras erfasster Bilder realer Person zusammengestellt, bei denen die dreidimensionale Gesichts- und/oder Kopfform, Kameraposition und Perspektive bekannt sind.

3. Verfahren nach Anspruch 1 oder 2, **dadurch gekennzeichnet, dass** bei der Erstellung der Fehlerstruktur Abstandsvektoren der Merkmalskoordinaten aus den Trainingsbildern gegenüber den entsprechenden Punkten im dreidimensionalen Zielmodell (22) erfasst werden, wobei insbesondere bei der Erstellung der Fehlerstruktur geeignete Entsprechungen der Merkmalspositionen in einer individuellen Anpassung des Zielmodells (22) gefunden werden, sofern solche Entsprechungen nicht bereits am Zielmodell (22) definiert sind.

4. Verfahren nach Anspruch 3, **dadurch gekennzeichnet, dass** als optimale Entsprechung einer Merkmalsposition im Zielmodell diejenige Entsprechung mit der geringsten Varianz des Abstands gefunden wird.

5. Verfahren nach einem der Ansprüche 1 bis 4, **dadurch gekennzeichnet, dass** das Optimierungsproblem regularisiert wird, insbesondere unter Verwendung einer Tikhonov-Regularisierung, wobei insbesondere mittels einer Gewichtung der Regularisierung eine Bewertung über die Aussagekraft des Modells erhalten wird.

6. Verfahren nach einem der Ansprüche 1 bis 5, **dadurch gekennzeichnet, dass** die Formulierung von geometrischen Einschränkungen für die Anpassung des Zielmodells (22) ein Übertragen der Koordinaten der erfassten Gesichtsmerkmale in ein einheitliches kameraunabhängiges Koordinatensystem umfasst und/oder die Abstandsvektoren in ein von der jeweiligen Ansicht des jeweiligen Bildes unabhängiges Referenzkoordinatensystem transformiert sind.

7. Verfahren nach einem der Ansprüche 1 bis 6, **dadurch gekennzeichnet, dass** bei der Erstellung der Fehlerstruktur bei Verwendung zweidimensionaler Merkmalskoordinaten

   a) eine fehlende Tiefeninformation durch Rückprojektion auf das Modell gewonnen wird, insbesondere durch Schnitte des 3D-Modells mit Strahlen durch die jeweiligen Pixel gemäß der Projektion oder durch Auslesen eines Tiefenpuffers eines dafür geeigneten Renderers, oder
   b) zweidimensionale Abstände zwischen Merkmalskoordinaten und 2D-Projektionen der entsprechenden Modellkoordinaten ins Koordinatensystem des jeweiligen Bildes verwendet werden,

   wobei insbesondere Merkmalspositionen, die in Bildern der jeweiligen Ansicht durch andere Teile des Kopfes (12) verdeckt sind, von der Berücksichtigung ausgeschlossen werden.

8. Verfahren nach einem der Ansprüche 1 bis 7, **dadurch gekennzeichnet, dass** die mehreren Bilder ($10^1$ - $10^n$) mit einer Kameraanordnung mit bekannten Positionen und Blickrichtungen mehrerer Kameras oder mit einer Kamera erstellt werden, wobei insbesondere eine Tiefenkamera verwendet wird, um die aufgenommenen Bilder mit Tiefeninformationen anzureichern.

9. Verfahren nach einem der Ansprüche 1 bis 8, **dadurch gekennzeichnet, dass** wenn zunächst nur ein Bild ($10^1$ - $10^n$) erstellt und die Verfahrensschritte a) bis d) auf das eine Bild ($10^1$ - $10^n$) angewendet werden, an einem oder mehreren nachfolgend aufgenommenen Bildern ($10^1$ - $10^n$) des gleichen Kopfes die Verfahrensschritte a) bis d) ausgeführt werden und damit das zunächst angepasste Zielmodell (22) weiter angepasst wird.

10. Verfahren nach einem der Ansprüche 1 bis 9, **dadurch gekennzeichnet, dass** in dem Fall, dass die mehreren Bilder ($10^1$ - $10^n$) mit einer unbekannten Kamera erstellt werden, eine approximierte Kalibrierung der unbekannten Kamera durchgeführt wird und die Kameraorientierungen zu den mehreren Bildern ($10^1$ - $10^n$) bestimmt werden.

11. System zur dreidimensionalen Rekonstruktion wenigstens eines Teils eines menschlichen Kopfes (12) aus mehreren Bildern ($10^1$ - $10^n$), die wenigstens den zu rekonstruierenden Teil des menschlichen Kopfes (12) aus verschiedenen Perspektiven zeigen, umfassend eine Datenverarbeitungsanlage, die ausgebildet und eingerichtet ist, ein Verfahren nach einem der Ansprüche 1 bis 10 durchzuführen.

12. System nach Anspruch 11, ferner umfassend eine Aufnahmevorrichtung, die ausgebildet und eingerichtet ist, die mehreren Bilder ($10^1$ - $10^n$), die wenigstens den zu rekonstruierenden Teil des menschlichen Kopfes (12) aus verschiedenen Perspektiven zeigen, zu erzeugen.

13. System nach Anspruch 12, **dadurch gekennzeichnet, dass** die Aufnahmevorrichtung wenigstens eine Tiefenkamera umfasst, die ausgebildet ist, neben einer Lichtintensität einen Abstand einzelner Bildpunkte zu messen.

**Claims**

1. A method for the three-dimensional, in particular true-to-scale, reconstruction of at least a part of a human head (12) from a plurality of images ($10^1$ - $10^n$) which show at least the part of the human head (12) to be reconstructed from different perspectives, comprising the following method steps:

   a) applying a feature recognition ($14^1$ - $14^n$) to the plurality of images ($10^1$ - $10^n$), in which facial features and their coordinates are recorded,

b) determining imaging parameters for the plurality of images ($10^1$ - $10^n$), which describe the respective camera-dependent perspective projections of the plurality of images ($10^1$ - $10^n$),

c) formulating geometric restrictions for the adaptation of a three-dimensional target model (22) based on the positions of the facial features recorded from the plurality of images ($10^1$ - $10^n$),

d) adapting the three-dimensional target model (22) to the geometric restrictions,

**characterized in that**, during the adaptation of the target model (22), data of an at least partially recorded error structure of the correspondences of the feature positions in the target model (22), which error structure reproduces the perspective-dependent behavior of the feature recognition, are used to decorrelate the geometric restrictions by weighting the geometric restrictions along certain directions and/or according to their statistical relationship, wherein the error structure of the correspondences of the feature positions is created a priori in the target model (22) by analyzing the perspective-dependent behavior of the feature recognition ($14^1$ - $14^n$) in each case at a certain view of the camera of the object based on a multiplicity of training images, for which the dimensions of the imaged human heads and an exact, computational model of the imaging are known.

2. The method according to Claim 1, **characterized in that** the multiplicity of training images to be analyzed

a) are synthetized by means of computer graphics, in particular on the basis of a statistically deformable three-dimensional face model or head model and/or a collection of known face and/or head shapes of real persons, and/or

b) are compiled from images of real persons recorded by means of cameras, of whom the three-dimensional face and/or head shape, camera position and perspective are known.

3. The method according to Claim 1 or 2, **characterized in that**, during the creation of the error structure, distance vectors of the feature coordinates are recorded from the training images with respect to the corresponding points in the three-dimensional target model (22), wherein, in particular during the creation of the error structure, suitable correspondences of the feature positions are found in an individual adaptation of the target model (22) if such correspondences are not already defined in the target model (22).

4. The method according to Claim 3, **characterized in that** that correspondence having the lowest variance of the distance is found as the optimal correspondence of a feature position in the target model.

5. The method according to any one of Claims 1 to 4, **characterized in that** the optimization problem is regularized, in particular using a Tikhonov regularization, wherein in particular an evaluation of the validity of the model is obtained by means of a weighting of the regularization.

6. The method according to any one of Claims 1 to 5, **characterized in that** the formulation of geometric restrictions for the adaptation of the target model (22) comprises a transfer of the coordinates of the recorded facial features into a uniform camera-independent coordinate system and/or the distance vectors are transformed into a reference coordinate system which is independent of the respective view of the respective image.

7. The method according to any one of Claims 1 to 6, **characterized in that** during the creation of the error structure using two-dimensional feature coordinates

a) missing depth information is obtained by back projection onto the model, in particular by sections of the 3D model having beams through the respective pixels according to the projection or by reading out a depth buffer of a renderer suited to this purpose, or

b) two-dimensional distances between feature coordinates and 2D projections of the corresponding model coordinates into the coordinate system of the respective image are used,

wherein in particular feature positions, which are concealed by other parts of the head (12) in images of the respective view, are excluded from the consideration.

8. The method according to any one of Claims 1 to 7, **characterized in that** the plurality of images ($10^1$ - $10^n$) are created with a camera arrangement having known positions and viewing directions of a plurality of cameras or with one camera, wherein a depth camera is in particular used in order to augment the acquired images with depth information.

9. The method according to any one of Claims 1 to 8, **characterized in that** if only one image ($10^1$ - $10^n$) is created initially and the method steps a) to d) are applied to the one image ($10^1$ - $10^n$), the method steps a) to d) are executed on one or more subsequently acquired images ($10^1$ - $10^n$) of the same head, and the initially adapted target model (22) is thereby further adapted.

10. The method according to any one of Claims 1 to 9, **characterized in that** in the case that the plurality of images ($10^1$ - $10^n$) are created with an unknown camera, an approximated calibration of the unknown camera is performed and the camera orientations for the plurality of images ($10^1$ - $10^n$) are determined.

11. A system for the three-dimensional reconstruction of at least a part of a human head (12) from a plurality of images ($10^1$ - $10^n$) which at least show the part of the human head (12) to be reconstructed from different perspectives, comprising a data processing system, which is configured and designed to perform a method according to any one of Claims 1 to 10.

12. The system according to Claim 11, further comprising an acquisition device which is configured and designed to produce the plurality of images ($10^1$ - $10^n$) which show at least the part of the human head (12) to be reconstructed from different perspectives.

13. The system according to Claim 12, **characterized in that** the acquisition device comprises at least one depth camera that is configured to measure a distance of individual pixels in addition to a light intensity.

**Revendications**

1. Procédé pour la reconstruction tridimensionnelle, en particulier à l'échelle, d'au moins une partie d'une tête humaine (12) à partir d'une pluralité d'images ($10^1$ - $10^n$) qui montrent au moins la partie de la tête humaine (12) à reconstruire depuis différentes perspectives, comprenant les étapes de procédé suivantes :

   a) application d'une reconnaissance de caractères distinctifs ($14^1$ - $14^n$) à la pluralité d'images ($10^1$ - $10^n$), dans lesquelles les caractéristiques faciales et leurs coordonnées sont enregistrées,
   b) détermination de paramètres d'imagerie pour la pluralité d'images ($10^1$ - $10^n$) qui décrivent les projections en perspective respectives dépendant de l'appareil de prise de vues des images multiples ($10^1$ - $10^n$),
   c) formulation de limites géométriques pour l'adaptation d'un modèle tridimensionnel cible (22) sur la base des positions des caractéristiques faciales enregistrées à partir de la pluralité d'images ($10^1$ - $10^n$),
   d) adaptation du modèle tridimensionnel cible (22) aux limites géométriques,

   **caractérisé en ce que**, lors de l'adaptation du modèle cible (22), des données d'une structure d'erreur au moins partiellement détectée des correspondances des positions des caractéristiques dans le modèle cible (22), qui représente le comportement dépendant de la perspective de la reconnaissance des caractéristiques, sont utilisées pour décorréler des contraintes géométriques en pondérant les contraintes géométriques le long certaines directions et/ou selon leur relation statistique, la structure d'erreur des correspondances des positions des caractéristiques dans le modèle cible (22) étant créée a priori en analysant le comportement dépendant de la perspective de la reconnaissance des caractéristiques ($14^1$ - $14^n$) dans chaque cas sous une vue spécifique de l'appareil de prise de vues sur l'objet sur la base d'une pluralité d'images d'apprentissage pour lesquelles les dimensions des têtes humaines imagées et un modèle de calcul exact de l'image sont connus.

2. Procédé selon la revendication 1, **caractérisé en ce que** la pluralité d'images d'apprentissage à analyser est

   a) synthétisée au moyen d'infographie, notamment sur la base d'un modèle de visage ou de tête tridimensionnel statistiquement déformable et/ou d'un ensemble de formes connues de visage et/ou de tête de personnes réelles, et/ou
   b) compilée à partir d'images de personnes réelles capturées au moyen d'appareils de prise de vues, pour lesquelles la forme tridimensionnelle du visage et/ou de la tête, la position de l'appareil de prise de vues et la perspective sont connues.

3. Procédé selon la revendication 1 ou la revendication 2, **caractérisé en ce que**, lors de la création de la structure d'erreur, des vecteurs de distance des coordonnées de caractéristiques provenant des images d'apprentissage par rapport aux points correspondants dans le modèle tridimensionnel cible (22) sont enregistrés, des correspondances appropriées des positions de caractéristiques étant en particulier trouvées dans une adaptation individuelle du modèle cible (22) pendant la création de la structure d'erreur, à condition que de telles correspondances ne soient pas déjà définies au niveau du modèle cible (22).

4. Procédé selon la revendication 3, **caractérisé en ce que**, en tant que correspondance optimale d'une position de caractéristique dans le modèle cible, il est trouvé la correspondance ayant la plus faible variance de la distance.

5. Procédé selon l'une quelconque des revendications 1 à 4, **caractérisé en ce que** le problème d'optimisation est régularisé, en particulier en utilisant une régularisation de Tikhonov, une évaluation de la valeur informative du modèle étant en particulier obtenue au moyen d'une pondération de la régularisation.

6. Procédé selon l'une quelconque des revendications 1 à 5, **caractérisé en ce que** la formulation des contraintes géométriques pour l'adaptation du modèle cible (22) comprend la transformation des coordonnées des caractéristiques faciales enregistrées dans un système de coordonnées uniforme et indépendant de l'appareil de prise de vues, et/ou les vecteurs de distance sont transformés en un système de coordonnées de référence indépendant de la vue respective de l'image respective.

7. Procédé selon l'une quelconque des revendications 1 à 6, **caractérisé en ce que**, lors de la création de la structure d'erreur, à l'aide de coordonnées de caractéristiques bidimensionnelles,

   a) une information de profondeur manquante est obtenue par rétroprojection sur le modèle, en particulier en découpant le modèle 3D avec des rayons passant par les pixels respectifs en fonction de la projection ou en lisant un tampon de profondeur d'un dispositif de rendu approprié, ou
   b) les distances bidimensionnelles entre les coordonnées des caractéristiques et les projections 2D des coordonnées correspondantes du modèle dans le système de coordonnées de l'image respective sont utilisées,

les positions de caractéristiques qui sont masquées par d'autres parties de la tête (12) dans les images de la vue respective étant en particulier exclues de la prise en considération.

8. Procédé selon l'une quelconque des revendications 1 à 7, **caractérisé en ce que** la pluralité d'images ($10^1$ - $10^n$) est créée avec un agencement d'appareils de prise de vues ayant des positions et des directions de vue connues d'une pluralité d'appareil de prise de vues ou avec un seul appareil de prise de vues, un appareil de prise de vues de profondeur étant en particulier utilisé pour enrichir les images enregistrées avec des informations de profondeur.

9. Procédé selon l'une quelconque des revendications 1 à 8, **caractérisé en ce que**, si initialement une seule image ($10^1$ - $10^n$) est créée et que les étapes a) à d) du procédé sont appliquées à la seule image ($10^1$ - $10^n$), les étapes a) à d) du procédé sont mises en œuvre sur une ou plusieurs images ($10^1$ - $10^n$) capturées ultérieurement de la même tête, et ainsi le modèle cible (22) initialement adapté est adapté de façon supplémentaire.

10. Procédé selon l'une quelconque des revendications 1 à 9, **caractérisé en ce que** dans le cas où les images de la pluralité d'images ($10^1$ - $10^n$) sont acquises au moyen d'un appareil de prise de vues inconnu, un étalonnage approximatif de l'appareil de prise de vues inconnu est effectué et des orientations de l'appareil de prise de vues vers la pluralité d'images ($10^1$ - $10^n$) sont déterminées.

11. Système de reconstruction tridimensionnelle d'au moins une partie d'une tête humaine (12) à partir d'une pluralité d'images ($10^1$ - $10^n$) montrant au moins la partie de la tête humaine (12) à reconstruire sous différentes perspectives, comprenant un système de traitement de données configuré et adapté pour mettre en œuvre un procédé selon l'une quelconque des revendications 1 à 10.

12. Système selon la revendication 11, comprenant en outre un dispositif d'enregistrement configuré et adapté pour générer la pluralité d'images ($10^1$ - $10^n$) montrant au moins la partie de la tête humaine (12) à reconstruire à partir de différentes vues en perspective.

13. Système selon la revendication 12, **caractérisé en ce que** le dispositif d'enregistrement comprend au moins un appareil de prise de vues de profondeur, lequel est adapté pour mesurer, en plus d'une intensité lumineuse, une distance de pixels individuels.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 102018129600 A

- WO 2017029488 A2

**In der Beschreibung aufgeführte Nicht-Patentliteratur**

- **HARTLEY, ZISSERMAN.** Multiple View Geometry in Computer Vision. Cambridge University Press, 2004
- **TRAN, LIU.** Nonlinear 3D Face Morphable Model. *Proceedings of IEEE Computer Vision and Pattern Recognition,* 2018
- **GERIG ; MOREL-FOSTER ; BLUMER EGGER ; LÜTHI ; SCHÖNBORN ; VETTER.** Morphable Face Models - An Open Framework. *Computer Research Repository (CoRR),* 2017
- **YU YANG et al.** Landmark Weighting for 3DMM Shape Fitting. *arXiv,* 16. August 2018, https://arxiv.org/ftp/arxiv/papers/1808/1808.05399.pdf
- **SUN ; WANG ; TANG.** Deep Convolutional Network Cascade for Facial Point Detection. *Proceedings of IEEE Conference on Computer Vision and Pattern Recognition (CVPR),* 2013

- **FENG ; WU ; SHAO ; WANG ; ZHOU.** Joint 3D Face Reconstruction and Dense Alignment with Position Map Regression Network. *Computer Research Repository (CoRR),* 2013, https://arxiv.org/pdf/1803.07835.pdf
- **BAS ; HUBER ; SMITH ; AWAIS ; KITTLER.** 3D Morphable Models as Spatial Transformer Networks. *Computer Research Repository (CoRR),* 2017, https://arxiv.org/pdf/1708.07199.pdf
- **BLANZ ; VETTER.** A Morphable Model for the Synthesis of 3D Faces. *SIGGRAPH: Proceedings of the 26th Annual Conference on Computer Graphics...,* 1999, https://gravis.dmi.unibas.ch/Sigg99.html